# EUROPÄISCHE PATENTANMELDUNG

(11) **EP 3 124 895 A1**
(43) Veröffentlichungstag der Anmeldung: **01.02.2017**
(21) Anmeldenummer: 16181653.3
(22) Anmeldetag: 28.07.2016
(51) Int. Cl.: F25B 17/08, F25B 30/04

(54) **ADSORPTIONSWÄRMEPUMPE MIT PLATTENWÄRMETAUSCHER**

(30) Priorität: 29.07.2015 DE 102015214374
(71) Anmelder: Vaillant GmbH, 42859 Remscheid (DE)
(72) Erfinder: Spahn, Hans-Josef, 40699 Erkrath (DE); Szuder, Thomas-Friedrich, 51379 Leverkusen (DE); Lingk, Tobias, 42799 Leichlingen (DE)
(74) Vertreter: Popp, Carsten

(57) **Zusammenfassung**

Die Erfindung betrifft eine Adsorptionswärmepumpe mit zumindest einem Sorberwärmetauscher (1), der zumindest einen flüssigkeitsbeaufschlagten Strömungskanal (12) und zumindest einen kältemittelbeaufschlagten Strömungskanal (11) mit darin angeordnetem Sorbens aufweist, und mit zumindest einem Verdampfer-Kondensator (2) zum alternierenden Verdampfen und Kondensieren des Kältemittels, wobei der Verdampfer-Kondensator (2) zumindest einen kältemittelbeaufschlagten Strömungskanal (21) und zumindest einen flüssigkeitsbeaufschlagten Strömungskanal (22) aufweist, wobei der Sorberwärmetauscher (1) und der Verdampfer-Kondensator (2) jeweils als Plattenwärmetauscher ausgebildet sind und wobei der kältemittelbeaufschlagte Strömungskanal (11) des Sorberwärmetauschers (1) und der kältemittelbeaufschlagten Strömungskanal (21) des Verdampfer-Kondensators (2) über zumindest einen Verbindungskanal (3) mit einem gasdicht schließenden Schaltventil strömungstechnisch miteinander gekoppelt sind.

## Beschreibung

Die Erfindung betrifft eine Adsorptionswärmepumpe mit zumindest einem Sorberwärmetauscher, der zumindest einen flüssigkeitsbeaufschlagten Strömungskanal und zumindest einen kältemittelbeaufschlagten Strömungskanal mit darin angeordnetem Sorbens aufweist, und mit zumindest einem Verdampfer-Kondensator zum alternierenden Verdampfen und Kondensieren des Kältemittels, wobei der Verdampfer-Kondensator zumindest einen kältemittelbeaufschlagten Strömungskanal und zumindest einen weiteren flüssigkeitsbeaufschlagten Strömungskanal aufweist.

Eine derartige Adsorptionswärmepumpe ist aus der DE 102 42 820 A1 bekannt. Insbesondere ein Gemisch aus Zeolith und Wasser verwendende Sorptionswärmepumpen arbeiten zyklisch aufeinander folgend einmal in der Adsorptionsphase und anschließend in der Desorptionsphase. Während der Adsorptionsphase wird vom nahezu wasserfreien Zeolith verdampftes Wasser aufgenommen und unter Wärmeabgabe am Sorber in den Zeolithen eingelagert. Während der Desorptionsphase wird dieses Wasser durch Zufuhr von Wärme in den Sorber verdampft und aus diesem ausgetrieben. Der Wasserdampf wird anschließend kondensiert und wieder dem Verdampfer-Kondensator der Sorptionswärmepumpe zugeführt, womit sich der Kreislauf schließt. Diese Adsorptions- und Desorptionsphasen alternieren. Der Wasserdampf dient somit it als Kältemittel, mit welchem der Sorberwärmetauscher beaufschlagt wird.

Während der Adsorptionsphase, d.h. während Einlagerung von Wasser im Sorbermaterial wird Wärme an das in dem flüssigkeitsbeaufschlagten Strömungskanal geführte Fluid übertragen und kann als Nutzwärme beispielsweise in einem Heizungswasserkreislauf eines Gebäudes zur Verfügung gestellt werden. Während dieser Adsorptionsphase wird Wasserdampf vom dem Verdampfer-Kondensator bereitgestellt.

Während der Desorptionsphase wird Wärme von dem in dem flüssigkeitsbeaufschlagten Strömungskanal geführten Fluid auf einem entsprechenden Niveau bereitgestellt, sodass das in dem Sorbermaterial eingelagerte Wasser durch die Wärmezufuhr verdampft und in dem Verdampfer-Kondensator kondensiert wird.

Die Aufgabe der Erfindung ist es, eine Adsorptionswärmepumpe der eingangs genannten Art derart weiterzubilden, so dass bei insgesamt optimierten thermischen Widerständen sowohl das Betriebsverhalten in der Adsorptionsphase verbessert wird, als auch während der Desportionsphase das eingelagerte Sorbens effizient desorbiert wird.

Diese Aufgabe wird erfindungsgemäß durch eine Adsorptionswärmepumpe gemäß Anspruch 1 gelöst. Vorteilhafte Weiterbildungen der Erfindungen sind in den Unteransprüchen angegeben.

Besonders vorteilhaft bei der Adsorptionswärmepumpe mit zumindest einem Sorberwärmetauscher, der zumindest einen flüssigkeitsbeaufschlagten Strömungskanal und zumindest einen kältemittelbeaufschlagten Strömungskanal mit darin angeordnetem Sorbens aufweist, und mit zumindest einem Verdampfer-Kondensator zum alternierenden Verdampfen und Kondensieren des Kältemittels, wobei der Verdampfer-Kondensator zumindest einen kältemittelbeaufschlagten Strömungskanal und zumindest einen weiteren flüssigkeitsbeaufschlagten Strömungskanal aufweist, ist es, dass der Sorberwärmetauscher und der Verdampfer-Kondensator jeweils als Plattenwärmetauscher ausgebildet sind und wobei der kältemittelbeaufschlagte Strömungskanal des Sorberwärmetauschers und der kältemittelbeaufschlagte Strömungskanal des Verdampfer-Kondensators über zumindest einen Verbindungskanal strömungstechnisch miteinander gekoppelt sind. Dabei weist der Verbindungskanal ein gasdicht schließendes Schaltventil auf. Durch die Anordnung eines gasdicht schließenden Schaltventils im Verbindungskanal zwischen dem Sorberwärmetauscher und dem Verdichterkondensator kann die Adsorptionswärmepumpe insbesondere als Langzeitenergiespeicher eingesetzt werden.

Nach dem Stand der Technik war es bisher üblich, dass der Sorber eine zylindrische Form aufweist.

Durch die Ausbildung des Sorberwärmetauschers als Plattenwärmetauscher insbesondere aus mehreren Wärmeübertragerplatten wird die thermisch leitende Oberfläche deutlich vergrößert, wodurch das Betriebsverhalten der Adsorptionswärmepumpe sowohl während des Adsorptionsprozesses, als auch während des Desorptionsprozesses deutlich verbessert wird.

Als Sorbens kommt dabei insbesondere ein Zeolith zum Einsatz. Der den Sorberwärmetauscher bildende Plattenwärmetauscher kann insbesondere dergestalt ausgebildet sein, dass eine Mehrzahl parallel geschalteter flüssigkeitsbeaufschlagter Strömungskanäle und/oder eine Mehrzahl parallel geschalter kältemittelbeaufschlagter Strömungskanäle angeordnet sind. Mit dem Begriff der Parallelschaltung ist dabei gemeint, dass diese Strömungskanäle jeweils über einen gemeinsamen Zulauf und einen gemeinsamen Ablauf verfügen.

Vorzugsweise sind die flüssigkeitsbeaufschlagten Strömungskanäle und die kältemittelbeaufschlagten Strömungskanäle des Sorberwärmetauschers alternierend angeordnet. Durch eine derartige alternierende Anordnung ist eine optimierte Wärmeübertragung innerhalb des Plattenwärmetauschers möglich.

Ebenfalls kann der Verdampfer-Kondensator als Plattenwärmetauscher aus mehreren Wärmeübertragerplatten ausgebildet sein. Dabei können wiederum eine Mehrzahl parallel geschalteter flüssigkeitsbeaufschlagter Strömungskanäle und/oder eine Mehrzahl parallel geschalter kältemittelbeaufschlagter Strömungskanäle angeordnet sein. Vorzugsweise sind die flüssigkeitsbeaufschlagten Strömungskanäle und die kältemittelbeaufschlagten Strömungskanäle des Verdampfer-Kondensators alternierend angeordnet.

Durch eine derartige alternierende Anordnung wird die Wärmeübertragung innerhalb des als Plattenwärmetauscher ausgebildeten Verdampfer-Kondensators optimiert.

Bei einer bevorzugten Ausführungsform sind die den Sorberwärmetauscher und den Verdampfer-Kondensator bildenden Plattenwärmetauscher vertikal angeordnet, sodass die in den Plattenwärmetauschern gebildeten Strömungskanäle senkrecht durchströmt werden.

Durch eine vertikale Anordnung der Plattenwärmetauscher mit senkrecht durchströmten Strömungskanälen wird die Abfuhr des gasförmigen Kältemittels beim Adsorptionsprozess im Verdampfer-Kondensator respektive beim Desorptionsprozess im Sorberwärmetauscher verbessert, da das gasförmige Kältemittel entlang der senkrecht angeordneten Strömungskanäle automatisch aufsteigt. Umgekehrt kann das Kondensat im Verdampfer-Kondensator durch die senkrecht angeordneten Strömungskanäle nach unten fließen.

Vorzugsweise sind der Sorberwärmetauscher und der Verdampfer-Kondensator jeweils aus mehreren Wärmeübertragenplatten gebildet, wobei flüssigkeitsbeaufschlagte Strömungskanäle und kältemittelbeaufschlagte Strömungskanäle jeweils alternierend angeordnet sind.

Besonders bevorzugt ist der Verbindungskanal zwischen dem Sorberwärmetauscher und dem Verdampfer-Kondensator in der oberen Hälfte, insbesondere im oberen Drittel, insbesondere im oberen Viertel der Höhe der vertikal stehenden Plattenwärmetauscher angeordnet.

Mit dem Begriff der Anordnung des Verbindungskanal in der oberen Hälfte, insbesondere im oberen Drittel, insbesondere im oberen Viertel der Höhe der vertikal stehenden Plattenwärmetauscher ist dabei umfasst, dass der gesamte Querschnitt des Verbindungskanals in den angegebenen Bereichen, also in der oberen Hälfte bzw. im oberen Drittel bzw. im oberen Viertel der Höhe der vertikal stehenden Plattenwärmetauscher angeordnet ist. Es ist aber ebenfalls eine derartige Ausgestaltung mit umfasst, bei welcher sich der Flächenschwerpunkt der Querschnittsfläche des Verbindungskanals in den genannten Bereichen, also in der oberen Hälfte bzw. im oberen Drittel bzw. im oberen Viertel der Höhe der vertikal stehenden Plattenwärmetauscher befindet.

Vorzugsweise bestehen die Wärmeübertragerplatten des Sorberwärmetauschers und/oder die Wärmeübertragerplatten des Verdampfer-Kondensators aus Edelstahl und/oder Kupfer und/oder einer Kupferlegierung.

Durch eine entsprechende Materialwahl können die gewünschten Materialeigenschaften vorgegeben werden. Bei Verwendung von Edelstahl ist es besonders vorteilhaft, dass dieses Material korrosionsbeständig ist. Ein besonderer Vorteil von Kuper und/oder einer Kupferlegierung besteht in der guten Wärmeleitfähigkeit derartiger Materialien, wodurch das Betriebsverhalten und die Wärmeübertragereigenschaften weiter verbessert werden können. Ferner sind korrosionsfreie Aluminiumlegierungen oder vakuumstabile korrosionsfest beschichtete Materialien anwendungstauglich.

In einer bevorzugten Ausführungsform weisen die Wärmeübertragerplatten des Sorberwärmetauschers und/oder die Wärmeübertragerplatten des Verdampfer-Kondensators teilweise oder vollständig eine thermische Beschichtung auf.

Bei einer solchen thermischen Beschichtung handelt es sich vorzugsweise um eine derartige Beschichtung, mittels derer der Wärmeleitungswiderstand an der Oberfläche der Wärmeübertragerplatten reduziert wird. Die Wärmeübertragerplatten können vollständig mit einer derartigen thermischen Beschichtung ausgerüstet sein oder aber in Teilbereichen mit einer derartigen thermischen Beschichtung ausgerüstet sein.

Vorzugsweise weist der Sorberwärmetauscher eine Mehrzahl parallel geschalteter kältemittelbeaufschlagter und sorbensbeladener Strömungskanäle auf, die mit einem mit kältemitteldampfbeaufschlagbaren Dampfkanal kommunizieren. Insbesondere besteht hierdurch die Möglichkeit, über den mit kältemitteldampfbeaufschlagbaren Dampfkanal eine Verbindung zum Dampfsystem des Verdampfer-Kondensators herzustellen. Dabei kann der Dampfkanal des Sorberwärmetauscher unmittelbar in den Verbindungskanal zum Verdampfer-Kondensator übergehen, insbesondere denselben Querschnitt aufweisen.

Vorzugsweise sind der Sorberwärmetauscher und/oder der Verdampfer-Kondensator jeweils einzeln oder gemeinsam in einem vakuumstabilen Gehäuse angeordnet.

Mit dem Begriff des vakuumstabilen Gehäuses ist dabei ein jeden einzelnen Plattenwärmetauscher oder die Gesamtanordnung von Wärmetauschern aufnehmendes Gehäuse bezeichnet, welches eine ausreichend große Stabilität aufweist, so dass dieses Gehäuse die Druckdifferenz zwischen Vakuum und Umgebungsdruck aufzunehmen vermag, ohne dass es zu einer Beschädigung des Gehäuses und/oder einzelner Komponenten der Adsortionswärmepumpe innerhalb des Gehäuses kommen kann.

Dabei kann der Sorberwärmetauscher in einem ersten derartigen vakuumstabilen Gehäuse angeordnet sein und der Verdampfer-Kondensator kann in einem zweiten derartigen vakuumstabilen Gehäuse angeordnet sein. Alternativ besteht auch die Möglichkeit, dass sowohl der Sorberwärmetauscher als auch der Verdampfer-Kondensator beide gemeinsam in einem vakuumstabilen Gehäuse angeordnet sind.

Zwei Ausführungsbeispiele der Erfindung werden nachfolgend anhand der Figuren erläutert. Es zeigen:
- Fig. 1: einen Schnitt der Seitenansicht des Sorberwärmetauschers sowie des Verdampfer-Kondensators;
- Fig. 2: eine Ansicht einer einzelnen Wärmeübertragerplatte des Sorberwärmetauschers sowie des Verdampfer-Kondensators nach Figur 1;
- Fig. 3: den Schnitt A - A nach Figur 2;
- Fig. 4: die Adsorptionswärmepumpe im Desorptionsmodus (oben) sowie im Adsorptionsmodus (unten) mit primär energetisch unterstützter Desorption;
- Fig. 5: die Adsorptionswärmepumpe im Desorptionsmodus (oben) sowie im Adsorptionsmodus (unten) mit durch erneuerbare Energie unterstützte Desorption;
- Fig. 6: eine zweite Ausführungsform einer Adsorptionswärmepumpe mit einer Langzeitenergiespeicherfunktionalität.

In den Figuren sind identische Bauteile mit identischen Bezugszeichen bezeichnet.

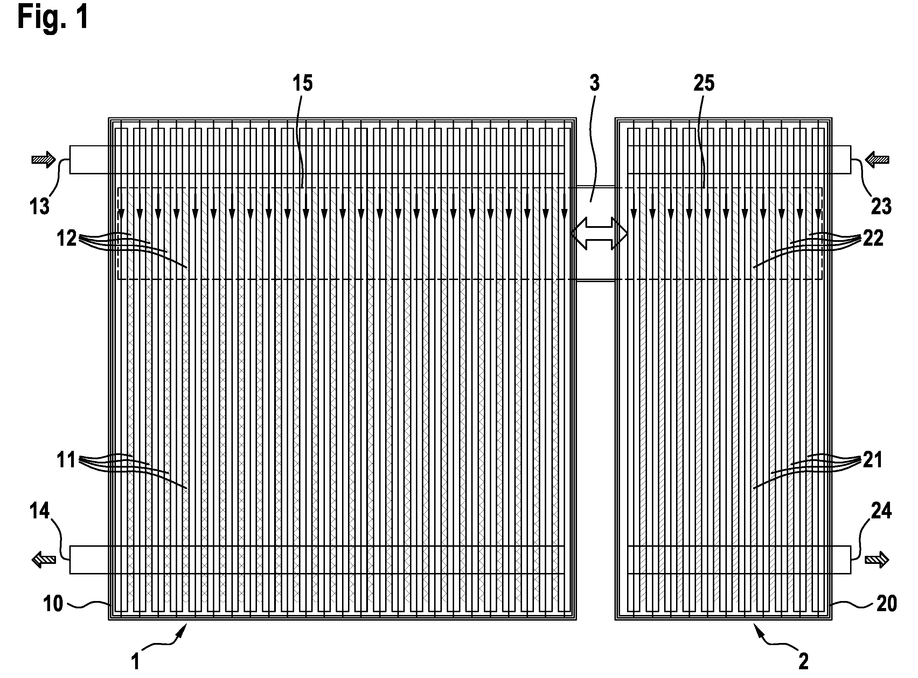

In Fig. 1 ist dargestellt ein Schnitt durch den Sorberwärmetauscher 1 und den Verdampfer-Kondensator 2. Sowohl der Sorberwärmetauscher 1 als auch der Verdampfer-Kondensator 2 sind jeweils als Plattenwärmetauscher ausgebildet. Beide Plattenwärmetauscher 1; 2 sind aus mehreren Platten gebildet. Im dargestellten Ausführungsbeispiel sind die Platten aus Edelstahl gebildet.

Der Sorberwärmetauscher 1 ist in dem vakuumstabilen Gehäuse 10 angeordnet. In dem Sorberwärmetauscher 1 wechseln sich mit Sorbtionsmaterial befüllte Dampfkanäle 11 und fluidführende Kanäle 12 jeweils ab. Mit dem Dampfkanal ist somit der kältemittelbeaufschlagte Strömungskanal bezeichnet. Des Weiteren verfügt der Sorberwärmetauscher 1 über einen Anschluss 13 zur Zuleitung von Fluid sowie einen Abfluss 14 zur Ableitung von Fluid aus dem Sorberwärmetauscher 1.

Die mit Sorbtionsmaterial befüllten kältemittelbeaufschlagten Strömungskanäle 11 des Sorberwärmetauschers 1 sind über einen Dampfkanal 15 miteinander verbunden und werden im Adsorptionsbetrieb von diesem Dampfkanal 15 mit Wasserdampf gespeist beziehungsweise wird über diesen Dampfkanal 15 verdampftes Wasser im Desortionsbetrieb abgeführt.

Über den Verbindungskanal 3 ist dieser Dampfkanal 15 des Sorberwärmetauschers 1 mit dem Dampfkanal 25 des Verdampfer-Kondensators 2 verbunden.

Der Verdampfer-Kondensator 2 weist grundsätzlich einen ähnlichen Aufbau auf wie der Sorberwärmetauscher 1. Dementsprechend ist eine Mehrzahl von Platten des Verdampfer-Kondensators 2 innerhalb des Verdampfer-Kondensatorgehäuses 20 angeordnet. Das Verdampfer-Kondensatorgehäuse 20 ist wiederum vakuumstabil ausgeführt, so dass die Druckdifferenz zwischen Vakuum und Umgebungsdruck von diesem Gehäuse 20 aufgenommen werden kann, ohne dass es zu Beschädigungen kommt.

Innerhalb des Gehäuses 20 des Verdampfer-Kondensators 2 wechseln sich Verdampfungs-/Kondensationskanäle 21 mit den Fluidkanälen 22 ab. Des Weiteren verfügt das Gehäuse 20 des Verdampfer-Kondensators 2 über einen Zulauf 23 zur Zuführung von Fluid und einen Ablauf 24 zur Ableitung von Fluid aus dem Verdampfer-Kondensator 2.

Bei der Adsorption wird Kältemittel, bei dem üblicherweise destilliertes Wasser zum Einsatz kommt, mittels Umweltwärme im Unterdruck im Verdampfer-Kondensator 2 verdampft. Das Kältemittel strömt über den Dampfkanal 25 des Verdampfer-Kondensators 2 durch den Verbindungskanal 3 in den Dampfkanal 15 des Sorberwärmetauschers. Über den Dampfkanal 15 des Sorberwärmetauschers 1 werden die mit Sorptionsmaterial befüllten Dampfkanäle 11 mit Kältemittel dampfbeaufschlagt. Dieser Dampf absorbiert am Sorber, der sich erwärmt und Wärme an den Wasserkreislauf abgibt. Dieser Wasserkreislauf innerhalb der Fluidkanäle 12 wird gespeist über den Zulauf 13 und das in dem Sorberwärmetauscher während der Adsorption erhitzte Wasser wird über den Ablauf 14 als Nutzwärme wie beispielsweise eine Gebäudeheizungsanlage und/oder einen Warmwasserspeicher abgegeben. Dementsprechend ist der Sorberwärmetauscher 1 bei der Adsorption thermisch mit einer Wärmesenke verbunden.

Bei der Desorption wird der Wasserkreislauf des Sorberwärmetauschers mittels eines Brenners und/oder mittels erneuerbarer Energie erhitzt. Dementsprechend ist der Sorberwärmetauscher 1 bei der Desorption thermisch mit einer Wärmequelle beispielsweise in Form eines Zusatzheizgerätes verbunden. Das über den Zulauf 13 den Fluidkanälen 12 des Sorberwärmetauschers 1 zugeführte Fluid gibt im Plattenwärmetauscher des Sorberwärmetauschers 1 Wärme an den Sorber in den mit Sorbtionsmaterial befüllten Dampfkanälen 11 ab, so dass das Kältemittel desorbiert wird und über den Dampfkanal 15 des Sorberwärmetauschers 1, der in diesem Fall als Dampfsammler fungiert, und weiter über den Verbindungskanal 3 dem Verdampfer-Kondensator 2 zugeführt wird. Das im Sorberwärmetauscher 1 desorbierte Kältemittel wird am Kondensator 2 kondensiert, um Wärme beispielsweise an einen Heizkreislauf abzugeben.

Verdampfer-Kondensator 2 bildet somit ein Bauteil, welches je nach Funktion mit anderen Komponenten verbunden wird. Die Fluidseite des Sorberwärmetauschers 1 wird ebenfalls abwechselnd mit einem Heizkreislauf entsprechend einer Wärmesenke oder einer Wärmequelle, wie beispielsweise einem Brenner und/oder einer solarthermischen Anlage verbunden.

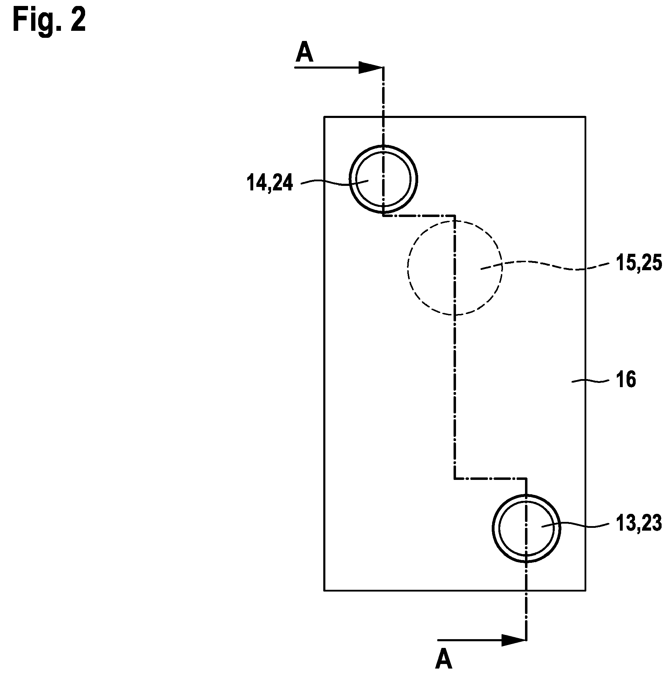

Fig. 2 zeigt eine Ansicht einer der in den Wärmetauschern mehrfach hintereinander angeordneten Wärmeübertragerplatten 16. Dabei werden sowohl im Sorberwärmetauscher 1 als auch im Verdampfer-Kondensator 2 baugleiche Wärmeübertragerplatten 16 eingesetzt. Daher sind in der folgenden Erläuterung sowie in Figur 2 der Fluidzulauf 13, 23 sowie der Fluidablauf 14, 24 jeweils mit beiden Bezugszeichen sowohl für den Sorberwärmetauscher 1 als auch für den Verdampfer-Kondensator 2 gekennzeichnet.

Erkennbar in Figur 2 ist zum einen der Fluidzulauf 13, 23 sowie der Fluidablauf 14, 24. Über den Fluidzulauf 13, 23 und den Fluidablauf 14, 24 erfolgt die Kopplung der Wärmeübertragerplatte 16 mit dem jeweiligen Fluidkreislauf. Ebenfalls erkennbar in Fig. 2 ist der Dampfkanal 15, 25 im Querschnitt. Über den Dampfkanal 15 des Sorberwärmetauschers 1 werden sämtliche mit Sorbtionsmaterial befüllte Dampfkanäle 11 des Sorberwärmetauschers 1 gespeist. Der Dampfkanal 15, 25 ist in der oberen Hälfte der Querschnittsfläche der Wärmeübertragerplatte 16 angeordnet. Besonders vorteilhaft ist dabei, dass bei der Verdampfung des Kältemittels in dem Sorberwärmetauscher 1 bei der Desorption bzw. bei der Verdampfung des Kältemittels im Verdampfer-Kondensator 2 bei dem Vorgang der Adsorption das verdampfte Kältemittel aufsteigt und sich automatisch im Dampfkanal 15, 25 sammelt und über den Verbindungskanal 3 weitergeleitet werden kann.

Sowohl der Sorberwärmetauscher 1 als auch der Verdampfer-Kondensator 2 sind durch Stapel mehrerer derartiger Wärmeübertragerplatten 16 gebildet. Dabei wechseln sich jeweils ein Verdampfungs-Kondensationskanal und ein fluidführender Kanal ab. Im Falle des Sorberwärmetauschers 1 wechseln sich mit Sorbens befüllte Dampfkanäle mit fluidführenden Kanälen ab.

Alle Platten 16 sind dabei mit dem den Dampfkanal 15, 25 bildenden Freischnitt versehen sowie ferner mit den die Fluidkanalanschlüsse 13, 23 sowie 14, 24 bildenden Bohrungen. Hierdurch einerseits alle Verdampfungskondensationskanäle untereinander gekoppelt sowie beim Sorberwärmetauscher alle Sorbens aufnehmenden Kanäle miteinander gekoppelt. Durch die geometrische Gestaltung der Wärmeübertragerplatten 16 sind somit die Dampfräume der beiden Funktionseinheiten Sorberwärmetauscher 1 und Verdampfer-Kondensator 2 miteinander verbunden, so dass ein kommunizierendes Dampfsystem geschaffen wird.

Hierdurch kann im Sorberwärmetauscher 1 während der Desorptionsphase das von einer beliebigen Wärmequelle erhitzte Fluid das eingelagerte Sorbens effizient desorbiert werden. Gleichzeitig wird auf dem Verdampfer-Kondensator 2 die Fluidseite auf die Rücklaufseite der Wärmesenke geschaltet. Der Verdampfer-Kondensator 2 übernimmt während der Desorptionsphase die Funktion des Kondensators und kondensiert die desorbierten Wasserdampfanteile aus dem Sorbens effizient aus.

Nach Beendigung der Desorption wird die Rücklaufseite der Wärmesenke auf den Sorberwärmetauscher 1 geschaltet. Gleichzeitig wird die Funktion des Verdampfer-Kondensators 2 auf den Betriebsmodus Verdampfung umgeschaltet, in dem eine geeignete Wärmequelle auf den Verdampfer 20 aufgeschaltet wird. Dabei kann es sich beispielsweise auch um eine Umweltwärmequelle handeln. Das vorher kondensierte und gesammelte Kältemittel wird zurück verdampft und über das Dampfkanalsystem 25 des Verdampfers 2 und den Verbindungskanal 3 in den Dampfkanal 15 des Sorberwärmetauschers 1 eingeleitet und über dieses Dampfkanalsystem wieder dem Sorbens im Sorberwärmetauscher 1 zugeführt. Die dabei frei werdende Adsorptionswärme wird im Sorberwärmetauscher 1 an das wärmeführende Fluid abgegeben und der Wärmesenke zugeführt.

Besonders vorteilhaft ist dabei, dass die thermische Widerstandskette auf der Sorberseite zwischen dem wärmeführenden Fluid und dem Sorbens erheblich geringer ist, als bei den bekannten Adsorptionswärmepumpen. Ferner ist gleichzeitig die thermische Widerstandskette auf der Verdampfer-Kondensatorseite zwischen dem wärmeführenden Fluid und dem Kältemittel erheblich geringer, als im Vergleich zu bekannten Wärmeübertragerkonzepten. Durch die reduzierten thermischen Widerstände werden auch Desorptionstemperaturen von deutlich unterhalb von 100 Grad Celsius möglich, was insbesondere die Nutzung von Solarenergie zur Desorption ermöglicht.

Ein weiterer besonderer Vorteil durch die Bauform der Wärmeübertragerplatten 16, wie sie in Figur 2 dargestellt ist, besteht darin, dass hierdurch gleichzeitig der Dampfkanal 15, 25 und ein kommunizierendes Dampfsystem zwischen Sorberwärmetauscher 1 und Verdampfer-Kondensator 2 geschaffen wird, wodurch ein separater Behälter zur Begrenzung des Dampfraums nicht erforderlich ist.

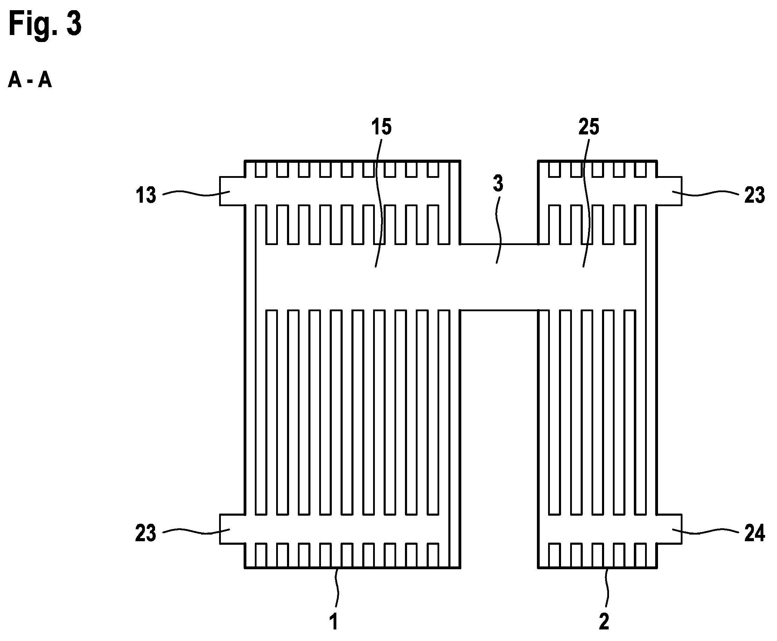

Figur 3 zeigt den Schnitt A - A nach Figur 2. Erkennbar sind die durchgehenden Fluidkanäle in der Flucht der Fluidanschlüsse 13, 14 des Sorberwärmetauschers 1 bzw. in der Flucht der Fluidanschlüsse 23, 24 des Verdampfer-Kondensators 2. Ferner ist der durchgehende Dampfraum erkennbar, welcher durch den Dampfkanal 15 des Sorberwärmetauschers 1, den Verbindungskanal 3 und den Dampfkanal 25 des Verdampfer-Kondensators 2 gebildet ist. Der Dampfraum ist durchgehend durch fluchtende Freischnitte in den Platten 16 der Wärmeübertrager gebildet. Der Verbindungskanal 3 weist ebenfalls denselben Querschnitt auf, wie die Freischnitte in den Platten 16 der Wärmeübertrager, sodass die Dampfkanäle 15, 25 und der Verbindungskanal 3 fluchtend sind.

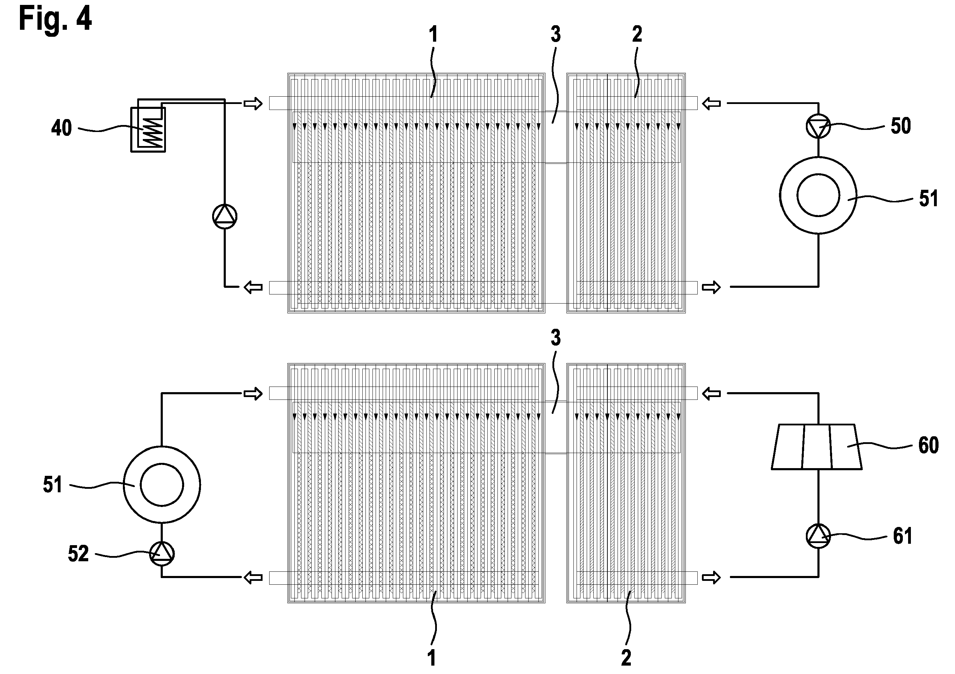

In Fig. 4 ist im oberen Teil der Figur dargestellt die Anwendung der erfindungsgemäßen Sorberwärmetauscher 1 und Verdampfer-Kondensator 2 im Rahmen einer Adsorptionswärmepumpe mit primär energetisch unterstützter Desorption. Im Desorptionsmodus erfolgt dabei die Fluiderwärmung mittels eines externen Brenners 4 in Form eines Gasbrenners. Das in Desorptionsmodus mittels des Gasbrenners 4 erhitzte Fluid verdampft im Sorberwärmetauscher 1 das im Sorbens absorbierte Wasser, welches über den Dampfkanal 3 dem als Kondensator arbeitenden Verdampfer-Kondensator 2 zugeführt wird. Die bei der Kondensation des Dampfes entnommene Wärme innerhalb des Verdampfer-Kondensators 2 wird über eine Umwälzpumpe 50 einem Heizkreislauf 51 zugeführt.

Im unteren Teil der Fig. 4 ist der Adsorptionsmodus dargestellt. In diesem Fall wird mittels einer solarthermischen Anlage 60 und der Umwälzpumpe 61 dem Verdampfer-Kondensator 2 erhitztes Fluid zugeführt, wodurch das unter Unterdruck stehende Kältemittel in dem Verdampfer-Kondensator 2 verdampft und über den Dampfkanal 3 dem Sorptionswärmetauscher 1 zugeführt wird. Durch Adsorption des Dampfes wird im Sorptionswärmetauscher 1 die Adsorptionswärme an den Fluidkreislauf der Heizungsanlage 51 abgegeben, deren Fluid mittels der Umwälzpumpe 52 umgewälzt wird.

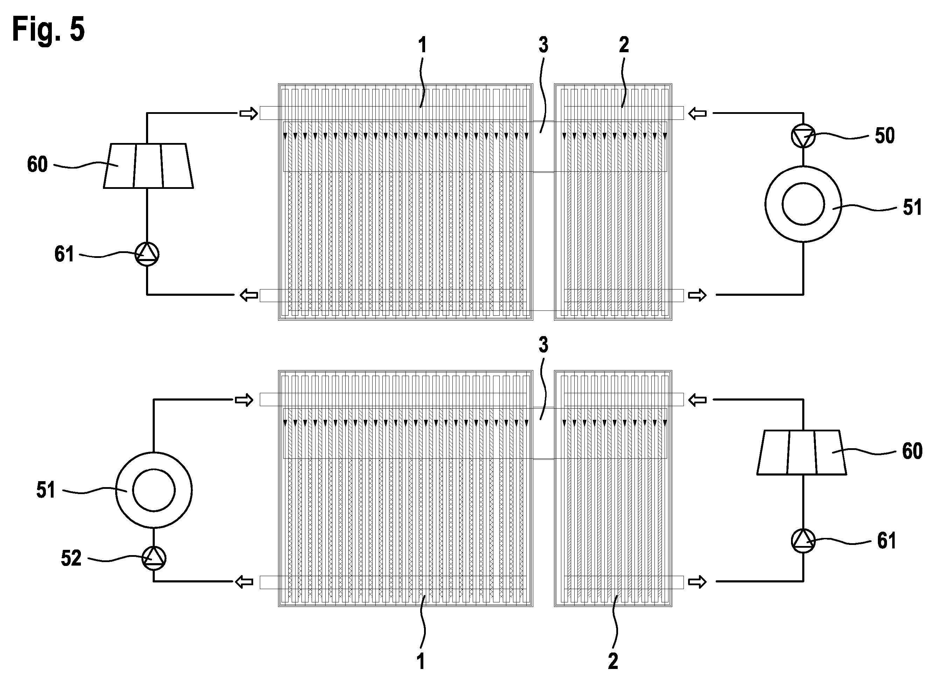

Fig. 5 zeigt einen weiteren Anwendungsfall der Adsorptionswärmepumpe. Dabei wird in dem im oberen Teil der Figur 5 dargestellten Desorptionsmodus das Fluid zur Zuführung in den Sorbtionswärmetauscher 1 mittels einer solarthermischen Anlage 60 erhitzt, um das im Sorberwärmetauscher 1 adsorbierte Kältemittel im Desorptionsmodus zu verdampfen und über den Dampfkanal 3 dem Verdampfer-Kondensator 2 zuzuführen. Die während des Kondensationsprozesses im Verdampfer-Kondensator 2 entnommene Wärmeenergie wird wiederum an den Heizkreislauf 51 abgegeben, dessen Fluid mittels der Umwälzpumpe 50 umgewälzt wird.

Im Desorptionsmodus der Adsorptionswärmepumpe, wie er im unteren Teil der Figur 5 dargestellt ist, wird über die solarthermische Anlage 60 das Fluid im Fluidkreislauf des Verdampfer-Kondensators 2 erhitzt und mittels der Umwälzpumpe 61 umgewälzt. Im Verdampfer-Kondensator 2 wird das unter Unterdruck stehende Kältemittel verdampft und über den Dampfkanal 3 dem Sorberwärmetauscher 1 zugeführt. Im Sorberwärmetauscher 1 wird im Adsorptionsmodus das verdampfte Kältemittel unter Wärmeabgabe an den Fluidkreislauf adsorbiert. Die über den Fluidkreislauf abgeführte Wärme aus dem Sorberwärmetauscher 1 wird dem Heizungskreislauf 51 zugeführt, dessen Fluid mittels der Umwälzpumpe 52 umgewälzt wird.

Die einzelnen Anlagenkomponenten sind dabei über entsprechende Ventile miteinander verschaltet, so dass sowohl die solarthermische Anlage 60 alternativ mit dem Sorbtionswärmetauscher 1 oder mit dem Verdampfer-Kondensator 2 verschaltet werden kann. Ferner kann auch der Heizkreislauf 51 als Wärmesenke sowohl mit dem Verdampfer-Kondensator 2 im Desorptionsmodus als auch mit dem Sorberwärmetauscher 1 im Adsorptionsmodus verschaltet werden.

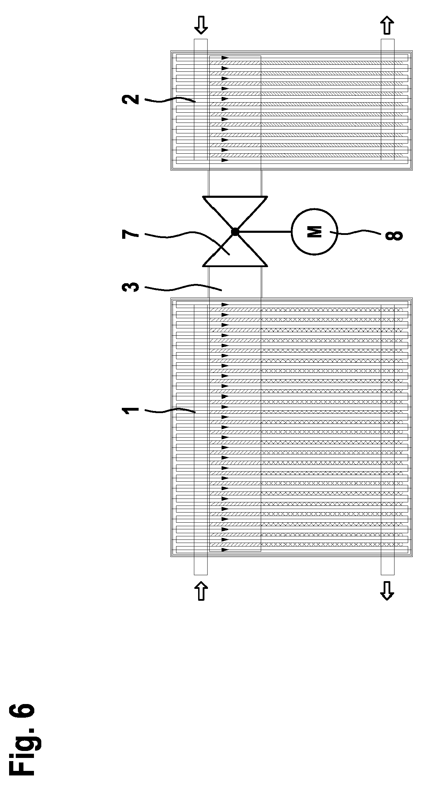

Fig. 6 zeigt eine weitere Ausführungsform einer Adsorptionswärmepumpe mit einem im Dampfkanal 3 zwischen Sorberwärmetauscher 1 und Verdampfer-Kondensator 2 angeordneten Schaltventil 7. Dieses Schaltventil 7 kann mittels des Motors 8 betätigt werden und einen gasdichten Abschluss innerhalb des Dampfkanales 3 bewirken. Durch dieses gasdicht schließende Ventil 7 wird eine Langzeitenergiespeicherfunktionalität der Adsorptionswärmepumpe ermöglicht.

## Patentansprüche

1. Adsorptionswärmepumpe mit zumindest einem Sorberwärmetauscher (1), der zumindest einen flüssigkeitsbeaufschlagten Strömungskanal (12) und zumindest einen kältemittelbeaufschlagten Strömungskanal (11) mit darin angeordnetem Sorbens aufweist, und mit zumindest einem Verdampfer-Kondensator (2) zum alternierenden Verdampfen und Kondensieren des Kältemittels, wobei der Verdampfer-Kondensator (2) zumindest einen kältemittelbeaufschlagten Strömungskanal (21) und zumindest einen flüssigkeitsbeaufschlagten Strömungskanal (22) aufweist, **dadurch gekennzeichnet, dass** der Sorberwärmetauscher (1) und der Verdampfer-Kondensator (2) jeweils als Plattenwärmetauscher ausgebildet sind und wobei der kältemittelbeaufschlagte Strömungskanal (11) des Sorberwärmetauschers (1) und der kältemittelbeaufschlagte Strömungskanal (21) des Verdampfer-Kondensators (2) über zumindest einen Verbindungskanal (3) strömungstechnisch miteinander gekoppelt sind, wobei der Verbindungskanal (3) ein gasdicht schließendes Schaltventil (7) aufweist.

2. Adsorptionswärmepumpe nach Anspruch 1, **dadurch gekennzeichnet, dass** die den Sorberwärmetauscher (1) und den Verdampfer-Kondensator (2) bildenden Plattenwärmetauscher vertikal angeordnet sind, sodass die in den Plattenwärmetauschern gebildeten Strömungskanäle senkrecht durchströmt werden.

3. Adsorptionswärmepumpe nach Anspruch 1 oder 2, **dadurch gekennzeichnet, dass** der Sorberwärmetauscher (1) und der Verdampfer-Kondensator (2) jeweils aus mehreren Wärmeübertragenplatten gebildet sind, wobei flüssigkeitsbeaufschlagte Strömungskanäle (12, 22) und kältemittelbeaufschlagte Strömungskanäle (11, 21) jeweils alternierend angeordnet sind.

4. Adsorptionswärmepumpe nach einem der vorherigen Ansprüche, **dadurch gekennzeichnet, dass** der Verbindungskanal (3) zwischen dem Sorberwärmetauscher (1) und dem Verdampfer-Kondensator (2) in der oberen Hälfte, insbesondere im oberen Drittel, insbesondere im oberen Viertel der Höhe der vertikal stehenden Plattenwärmetauscher angeordnet ist.

5. Adsorptionswärmepumpe nach einem der vorherigen Ansprüche, **dadurch gekennzeichnet, dass** die Wärmeübertragerplatten (16) des Sorberwärmetauschers (1) und/oder die Wärmeübertragerplatten des Verdampfer-Kondensators (2) aus Edelstahl und/oder Kupfer und/oder einer Kupferlegierung und/oder korrosionsfreie Aluminiumlegierungen und/oder vakuumstabile korrosionsfest beschichtete Materialien bestehen.

6. Adsorptionswärmepumpe nach einem der vorherigen Ansprüche, **dadurch gekennzeichnet, dass** die die Wärmeübertragerplatten (16) des Sorberwärmetauschers (1) und/oder die Wärmeübertragerplatten des Verdampfer-Kondensators (2) teilweise oder vollständig eine thermische Beschichtung aufweisen.

7. Adsorptionswärmepumpe nach einem der vorherigen Ansprüche, **dadurch gekennzeichnet, dass** der Sorberwärmetauscher (1) und/oder der Verdampfer-Kondensator (2) jeweils oder gemeinsam in einem vakuumstabilen Gehäuse (10, 20) angeordnet sind.
